# EUROPEAN PATENT APPLICATION

(11) **EP 4 794 039 A1**
(43) Date of publication of application: **19.08.2026**
(21) Application number: 25869594.9
(22) Date of filing: 12.09.2025
(51) Int. Cl.: H01M 10/04

(54) **BATTERY CELL, BATTERY PACK, AND DEVICE COMPRISING SAME**

(30) Priority: 27.12.2024 KR 20240198452
(71) Applicant: LG ENERGY SOLUTION, LTD., Seoul 07335 (KR)
(72) Inventor: CHAE, Byungmok, Daejeon 34122 (KR)
(74) Representative: Goddar, Heinz J.
(86) International application number: PCT/KR2025/014248
(87) International publication number: WO 2026/141856

(57) **Abstract**

A battery cell of the present invention includes a wound electrode stack, wherein the electrode stack includes a plurality of positive electrodes and a plurality of negative electrodes, and for at least two of the electrodes, the winding center of the electrode with a lower active material loading amount is located inward of the winding center of the electrode with a higher active material loading amount.

## Description

### [TECHNICAL FIELD]

The present invention relates to a battery cell, a battery pack, and a device including the same. More specifically, the present invention relates to a battery cell having a plurality of positive electrodes and a plurality of negative electrodes, a battery pack, and a device including the same.

### [BACKGROUND ART]

The description in this section merely provides background information for the present invention and does not constitute prior art.

With the advancement of automobiles, energy storage batteries, robots, and satellites, extensive research has been carried out on secondary batteries that are employed as driving power sources therefor.

Secondary batteries are classified, according to the shape of a battery case, into cylindrical batteries in which an electrode assembly is accommodated in a cylindrical can, prismatic batteries in which an electrode assembly is accommodated in a prismatic metal can, and pouch-type batteries in which an electrode assembly is accommodated in a pouch-type case formed of an aluminum laminate sheet.

The electrode assembly housed in the battery case is a chargeable/dischargeable power-generation element comprising a stacked structure of a positive electrode, a separator, and a negative electrode, and is classified into a jelly-roll type, a stack type, or a stack/folding type. The jelly-roll type is a structure in which a separator is interposed between long, sheet-shaped positive and negative electrodes coated with an active material, and the electrodes are wound; the stack type is a structure in which a plurality of positive and negative electrodes of a predetermined size are sequentially stacked with separators interposed therebetween; and the stack/folding type is a composite structure of the jelly-roll type and the stack type. Among these, the jelly-roll-type electrode assembly has the advantages of being easy to manufacture and having a high energy density by weight.

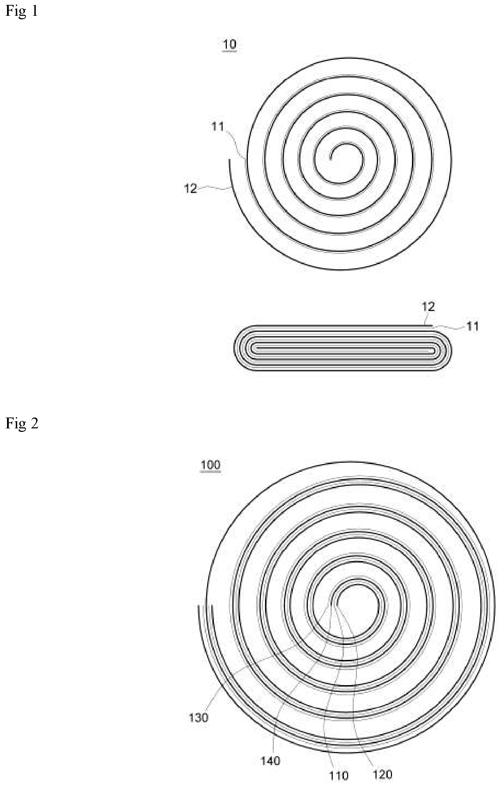

FIG. 1 illustrates a jelly-roll-type electrode assembly. Referring to FIG. 1, the jelly-roll-type electrode assembly is typically formed by stacking and winding a single positive electrode (11) and a single negative electrode (12). However, each electrode (11, 12) is bent with a very high curvature at the central portion of the jelly-roll-shaped electrode assembly, and this curvature causes great stress at the inner end of the electrode.

Meanwhile, the negative electrode and the positive electrode may respectively include a current collector and an active material layer covering the current collector. However, when the active material loading is high, there is a problem in that sufficient electrode adhesion may not be secured or greater stress may be applied due to the bending. Conversely, when the active material loading is low, the total length of the electrode increases in order to store the same amount of energy, thereby causing an increase in the resistance of the battery and an increase in the number of rolling cycles in the winding process.

### [DETAILED DESCRIPTION OF THE INVENTION]

### [TECHNICAL PROBLEM]

Accordingly, the present invention has been devised to solve the problems of the prior art, and an aspect of the present invention is to provide a battery cell, a battery pack, and a device including the same, which can employ a plurality of electrodes having different specifications, such as current collector thickness or active material loading, while taking into account stress applied to the electrodes.

The technical problems to be solved by the present invention are not limited to the problem set forth above, and other problems not mentioned will be clearly understood by those skilled in the art from the following description.

### [TECHNICAL SOLUTION]

A battery cell according to an embodiment of the present invention comprises a wound electrode stack, the electrode stack including a plurality of positive electrodes and a plurality of negative electrodes, wherein, for at least two of the electrodes, a winding center of an electrode having a lower active material loading is positioned inward of a winding center of an electrode having a higher active material loading.

The electrode stack can be wound such that, among the winding centers of the respective electrodes, the winding center of the negative electrode is located at the innermost position.

The electrode stack includes a first positive electrode, a first negative electrode, a second positive electrode, and a second negative electrode, and may be wound such that, from the inside to the outside of the battery cell, a winding center of the first negative electrode, a winding center of the first positive electrode, a winding center of the second negative electrode, and a winding center of the second positive electrode are sequentially positioned.

At least one positive electrode includes a positive electrode current collector, an inner positive electrode active material layer disposed on an inner surface of the positive electrode current collector, and an outer positive electrode active material layer disposed on an outer surface of the positive electrode current collector, wherein an active material loading amount of the inner positive electrode active material layer may be less than an active material loading amount of the outer positive electrode active material layer.

At least one negative electrode includes a negative electrode current collector, an inner negative electrode active material layer disposed on an inner surface of the negative electrode current collector, and an outer negative electrode active material layer disposed on an outer surface of the negative electrode current collector, wherein an active material loading amount of the inner negative electrode active material layer may be less than an active material loading amount of the outer negative electrode active material layer.

At least one positive electrode includes a positive electrode current collector, an inner positive electrode active material layer disposed on an inner surface of the positive electrode current collector, and an outer positive electrode active material layer disposed on an outer surface of the positive electrode current collector, wherein an active material loading amount of the inner positive electrode active material layer is less than an active material loading amount of the outer positive electrode active material layer; at least one negative electrode includes a negative electrode current collector, an inner negative electrode active material layer disposed on an inner surface of the negative electrode current collector, and an outer negative electrode active material layer disposed on an outer surface of the negative electrode current collector, wherein an active material loading amount of the inner negative electrode active material layer is less than an active material loading amount of the outer negative electrode active material layer; and, between an outer positive electrode active material layer and an inner negative electrode active material layer facing each other, a capacity of the outer positive electrode active material layer may be less than a capacity of the inner negative electrode active material layer.

The capacity ratio (NP Ratio) of the negative electrode and the positive electrode of the electrode stack may be 1 or more.

The electrode stack may further include a plurality of separators.

The plurality of separators may be of the same type.

The plurality of separators may include two different types of separators.

The electrode stack includes an SRS separator and an aramid separator, wherein a winding center of the SRS separator may be positioned inward of a winding center of the aramid separator.

The electrode stack includes two different types of negative electrodes, and may be wound such that a winding center of the negative electrode having a lower volume expansion rate of the two negative electrodes is positioned inward of a winding center of the other of the two negative electrodes.

The electrode stack includes a silicon negative electrode and a graphite negative electrode, and the graphite negative electrode may include at least one of a natural graphite negative electrode and an artificial graphite negative electrode.

The electrode stack includes two different types of negative electrodes, and may be wound such that a winding center of the negative electrode having a lower thermal conductivity of the two negative electrodes is positioned outward of a winding center of the other of the two negative electrodes.

The electrode stack may include two different types of positive electrodes, and may be wound such that a winding center of the positive electrode having a lower volume expansion rate of the two positive electrodes is positioned inward of a winding center of the other of the two positive electrodes.

The electrode stack includes two different types of positive electrodes, and may be wound such that a winding center of the positive electrode having a lower thermal conductivity of the two positive electrodes is positioned outward of a winding center of the other of the two positive electrodes.

The thickness of the positive electrode current collector of one positive electrode may be different from the thickness of the positive electrode current collector of the other positive electrode.

The thickness of the negative electrode current collector of one negative electrode may be different from the thickness of the negative electrode current collector of the other negative electrode.

A battery pack of the present invention includes one or more of the above-described battery cells.

A device of the present invention includes the above-described battery pack as a power source.

The device may be selected from the group consisting of a mobile phone, a portable computer, a smartphone, a smart pad, a netbook, a Light Electronic Vehicle (LEV), an electric vehicle, a hybrid electric vehicle, a plug-in hybrid electric vehicle, and a power storage device.

### [EFFECT OF THE INVENTION]

According to the present invention, there are provided a battery cell, a battery pack, and a device including the same, which can employ a plurality of electrodes having different specifications, such as current collector thickness or active material loading amount, in consideration of stress applied to the electrodes.

In addition, there are provided a battery cell, a battery pack, and a device including the same, in which battery resistance performance is improved by shortening a length of the electrodes in a winding direction as compared with a conventional battery cell of the same capacity.

Additionally, a battery cell, a battery pack, and a device including the same that can employ multiple separators with different physical properties are provided.

This provides a battery cell, a battery pack, and a device including the same with improved internal stress, resistance performance, energy density, and heat resistance.

### [BRIEF DESCRIPTION OF THE DRAWINGS]

FIG. 1 illustrates a jelly-roll-type electrode assembly.
FIG. 2 is a schematic diagram of an electrode stack of a battery cell according to an embodiment of the present invention.
FIG. 3 is a diagram illustrating a modification of an electrode stack according to an embodiment of the present invention.
FIG. 4 illustrates an electrode stack of a battery cell according to an embodiment of the present invention.
FIG. 5 is a partially enlarged view of FIG. 4.
FIG. 6 is a partially enlarged view of an electrode stack according to another embodiment of the present invention.
FIG. 7 is a perspective view of a battery cell according to an embodiment of the present invention.

### [BEST MODE FOR CARRYING OUT THE INVENTION]

Hereinafter, embodiments of the present invention will be described in detail with reference to the accompanying drawings, such that those skilled in the art to which the present invention pertains can readily practice the invention.

Please note that the drawings are schematic and not drawn to scale. The relative dimensions and proportions of parts in the drawings may be exaggerated or reduced for clarity and convenience, and any dimensions illustrated are merely exemplary and not intended to be limiting. In addition, when identical structures, elements, or parts appear in more than one drawing, the same reference numerals are used to indicate similar features.

In this specification, terms such as "first," "second," and "third" may be used to describe various components, but these components are not to be limited by these terms. The terms are used to distinguish one component from another. For example, without departing from the scope of the present invention, a first component may be referred to as a second component or a third component, and likewise, the second or third component may be referred to interchangeably.

The present invention relates to a battery cell comprising a wound electrode stack, wherein the electrode stack comprises a plurality of positive electrodes and a plurality of negative electrodes. Here, for at least two of the electrodes, a winding center of an electrode having a lower active material loading is positioned inward of a winding center of an electrode having a higher active material loading.

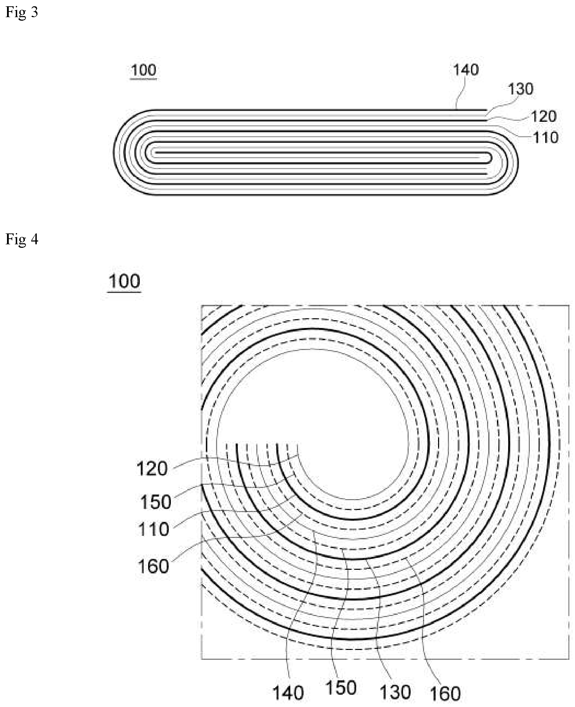

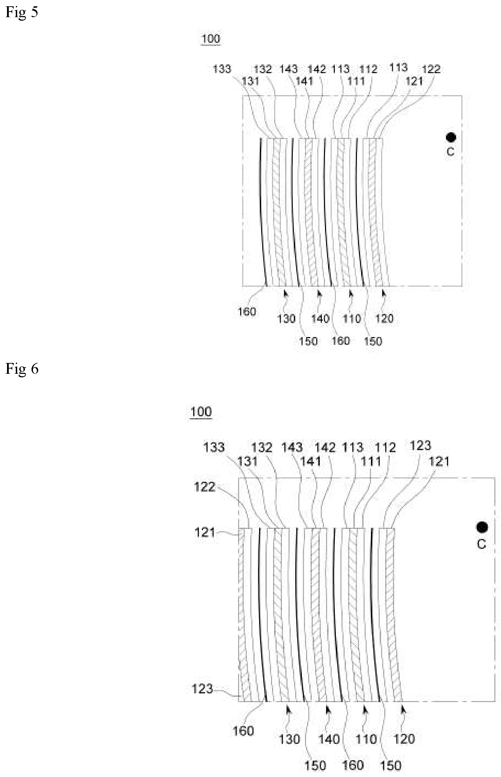

Hereinafter, a battery cell according to an embodiment of the present invention will be described in detail with reference to the drawings. FIG. 2 is a schematic diagram of an electrode stack of a battery cell according to an embodiment of the present invention. FIG. 3 is a diagram illustrating a modification of a battery cell according to an embodiment of the present invention. FIG. 4 illustrates an electrode stack of a battery cell according to an embodiment of the present invention. FIG. 5 is a partially enlarged view of FIG. 4. Hereinafter, the "winding center" of an electrode refers to the innermost end of the wound electrode. Referring to FIGS. 2 to 5, a battery cell according to an embodiment of the present invention includes a wound electrode stack. The electrode stack comprises a plurality of positive electrodes (110, 130) and a plurality of negative electrodes (120, 140). Here, in at least two of the electrodes, a winding center of an electrode having a lower active material loading is positioned inward of a winding center of an electrode having a higher active material loading. According to this configuration, the stress due to curvature during the winding of the inner end of an electrode with a high active material loading can be reduced.

The electrode stack (100) can be wound such that, among the winding centers of each electrode (110, 120, 130, 140), the winding center of the negative electrode (120) is located at the innermost position. The capacity ratio (NP Ratio) of the negative electrodes (120, 140) and the positive electrodes (110, 130) of the electrode stack (100) may be 1 or more. In one embodiment, the electrode stack (100) may include a first positive electrode (110), a first negative electrode (120), a second positive electrode (130), and a second negative electrode (140). For example, the stack may be wound such that the winding center of the first negative electrode (120), the winding center of the first positive electrode (110), the winding center of the second negative electrode (140), and the winding center of the second positive electrode (130) are sequentially positioned from the inside to the outside of the battery cell. Meanwhile, the spirit of the present invention is not limited to the above example and the drawings in this specification, and as another example, the electrode stack (100) may be wound such that the winding center of the positive electrode (110) is located at the innermost position. In other words, the winding order of the positive and negative electrodes is not limited to a specific winding order.

At least one positive electrode may include a positive electrode current collector, an inner positive electrode active material layer disposed on an inner surface of the positive electrode current collector, and an outer positive electrode active material layer disposed on an outer surface of the positive electrode current collector. Here, the active material loading amount of the inner positive electrode active material layer may be less than the active material loading amount of the outer positive electrode active material layer. This is in consideration of the fact that the inner surface of each electrode (110, 120, 130, 140) at the inner end has a higher curvature than the outer surface. In one embodiment, each of the first positive electrode (110) and the second positive electrode (130) may include a positive electrode current collector (111, 131), an inner positive electrode active material layer (112, 132), and an outer positive electrode active material layer (113, 133).

At least one negative electrode may include a negative electrode current collector, an inner negative electrode active material layer disposed on an inner surface of the negative electrode current collector, and an outer negative electrode active material layer disposed on an outer surface of the negative electrode current collector. Here, the active material loading amount of the inner negative electrode active material layer may be less than the active material loading amount of the outer negative electrode active material layer. This is in consideration of the fact that the inner surface of each electrode (110, 120, 130, 140) at the inner end has a higher curvature than the outer surface. In one embodiment, each of the first negative electrode (120) and the second negative electrode (140) may include a negative electrode current collector (121, 141), an inner negative electrode active material layer (122, 142), and an outer negative electrode active material layer (123, 143).

In the outer positive electrode active material layer and the inner negative electrode active material layer facing each other (this arrangement assumes a case in which the positive electrode having the positive electrode active material layer is wound outward of the negative electrode having the negative electrode active material layer, with the electrode having the negative electrode active material layer being wound by one additional turn), a capacity ratio (NP Ratio) of 1 or more must be satisfied, such that a capacity of the outer positive electrode active material layer is less than a capacity of the inner negative electrode active material layer. In addition, for each of the positive and negative electrode active material layers, an inner loading amount must be less than an outer loading amount, in consideration of the fact that an inner end of the wound active material layer has a higher curvature than an outer end.

The electrode stack (100) of the present invention is not limited to being wound in the shape of a circular spiral, and may be wound in the shape of an elliptical spiral, as shown in FIG. 3, for example.

Referring to FIGS. 4 and 5, for example, the active material loading amount of the inner positive electrode active material layer (112) of the first positive electrode (110) may be less than the active material loading amount of the outer positive electrode active material layer (113) of the first positive electrode (110). The active material loading amount of the inner negative electrode active material layer (142) of the second negative electrode (140) may be less than the active material loading amount of the outer negative electrode active material layer (143) of the second negative electrode (140). Likewise, the active material loading amount of the inner positive electrode active material layer (132) of the second positive electrode (130) may be less than the active material loading amount of the outer positive electrode active material layer (133) of the second positive electrode (130).

For example, referring to FIG. 5, a capacity ratio of "active material capacity of the inner negative electrode active material layer (122) of the first negative electrode" : "active material capacity of the outer negative electrode active material layer (123) of the first negative electrode" : "active material capacity of the inner positive electrode active material layer (112) of the first positive electrode" : "active material capacity of the outer positive electrode active material layer (113) of the first positive electrode" : "active material capacity of the inner negative electrode active material layer (142) of the second negative electrode" : "active material capacity of the outer negative electrode active material layer (143) of the second negative electrode" : "active material capacity of the inner positive electrode active material layer (132) of the second positive electrode" : "active material capacity of the outer positive electrode active material layer (133) of the second positive electrode" may form a ratio of 5:6:5:6:7:8:7:4 in terms of capacity, and 5:6:10:12:7:8:14:8 in terms of loading amount. As such, the capacity-based ratio and the loading-based ratio between the inner and outer sides of each electrode may differ from each other. In this regard, generally, when configuring an electrode, the specific capacity of the positive electrode active material is made smaller than that of the negative electrode active material. However, since capacity and loading amount are in a directly proportional relationship, for the relationship between the inside and outside within the same electrode (for example, between the inside and the outside of the positive electrode, or between the inside and the outside of the negative electrode), both the loading amount ratio and the capacity ratio may be expressed in the same manner. However, for the relationship between different electrodes (the positive electrode and the negative electrode, for example, the relationship between the first positive electrode and the first negative electrode, or the relationship between the second positive electrode and the second negative electrode), it may be preferable to express the relationship only as a capacity ratio.

FIG. 6 is a partially enlarged view of an electrode stack according to another embodiment of the present invention.

Referring to FIG. 6, an electrode stack (100) according to another embodiment of the present invention may be configured such that the innermost side (winding start region) of the inner negative electrode active material layer (122) of the first negative electrode is positioned radially outward of the outer positive electrode active material layer (133) of the second positive electrode. In this case, a capacity ratio of "active material capacity of the inner negative electrode active material layer (122) of the first negative electrode" : "active material capacity of the outer negative electrode active material layer (123) of the first negative electrode" : "active material capacity of the inner positive electrode active material layer (112) of the first positive electrode" : "active material capacity of the outer positive electrode active material layer (113) of the first positive electrode" : "active material capacity of the inner negative electrode active material layer (142) of the second negative electrode" : "active material capacity of the outer negative electrode active material layer (143) of the second negative electrode" : "active material capacity of the inner positive electrode active material layer (132) of the second positive electrode" : "active material capacity of the outer positive electrode active material layer (133) of the second positive electrode" may be 9:6:5:6:7:8:7:8. That is, in an electrode stack (100) according to another embodiment of the present invention, to increase the capacity of the outer positive electrode active material layer (133) of the second positive electrode, the capacity of the inner negative electrode active material layer (122) of the first negative electrode is made larger than that of the outer positive electrode active material layer (133). At the same time, the winding start point of the inner negative electrode active material layer (122) (i.e., the innermost side thereof) is configured to be located radially outward of the outer positive electrode active material layer (133) of the second positive electrode.

The electrode stack (100) may further include a plurality of separators (150, 160), wherein the plurality of separators (150, 160) may include two different types of separators (150, 160). The electrode stack (100) may include a first separator (150) and a second separator (160). A virtual plane passing through a stack winding center (C), which is the winding center of the electrode stack (100), and perpendicular to a radial direction of the electrode stack (100) may be designated as a reference plane, and a cut surface obtained by cutting the electrode stack (100) along the reference plane may be designated as a reference cut surface. When viewing a cut surface located on one side or the other in a radial direction from the stack winding center (C) among the reference cut surfaces, a first separator (150) and a second separator (160) may be arranged to alternate with each other along the radial direction.

One of the first separator (150) and the second separator (160) may be provided as an SRS separator, and the other may be provided as an aramid separator. For example, the first separator (150) may be an SRS separator, and the second separator (160) may be an aramid separator.

In addition, referring back to FIG. 5, with respect to the stack winding center (C), the winding center of the SRS separator (150) may be located inward of the winding center of the aramid separator (160). In other words, the winding center of the SRS separator (150) may be located closer to the stack winding center (C) than the winding center of the aramid separator (160). That is, the radial distance between the winding center of the SRS separator (150) and the stack winding center (C) may be smaller than the radial distance between the winding center of the aramid separator (160) and the stack winding center (C).

An aramid separator has excellent heat resistance, but may cause issues in the winding process if bent with a high curvature due to friction with winding equipment. This arrangement allows for taking advantage of the aramid separator while suppressing its problems.

The electrode stack (100) includes two different types of negative electrodes (120, 140), and may be wound such that a winding center of the negative electrode having a lower volume expansion rate of the two negative electrodes (120, 140) is positioned inward of a winding center of the other of the two negative electrodes (120, 140). For example, the electrode stack (100) may include a silicon negative electrode (140) and a graphite negative electrode (120). As a more specific example, the graphite negative electrode (120) included in the electrode stack (100) may be provided as at least one of an artificial graphite negative electrode and a natural graphite negative electrode. As an even more specific example, the graphite negative electrode (120) can be understood to include only artificial graphite, only natural graphite, or both artificial and natural graphite. Here, the silicon negative electrode (140) with a high volume expansion rate may be disposed outward of the artificial graphite negative electrode (120) which has a lower volume expansion rate.

Likewise, the electrode stack (100) includes two different types of positive electrodes (110, 130), and may be wound such that a winding center of the positive electrode having a lower volume expansion rate of the two positive electrodes (110, 130) is positioned inward of a winding center of the other of the two positive electrodes (110, 130).

The electrode stack (100) includes two different types of negative electrodes (120, 140), and may be wound such that a winding center of the negative electrode having a lower thermal conductivity of the two negative electrodes (120, 140) is positioned outward of a winding center of the other of the two negative electrodes (120, 140).

Likewise, the electrode stack (100) includes two different types of positive electrodes (110, 130), and may be wound such that a winding center of the positive electrode having a lower thermal conductivity of the two positive electrodes (110, 130) is positioned outward of a winding center of the other of the two positive electrodes (110, 130).

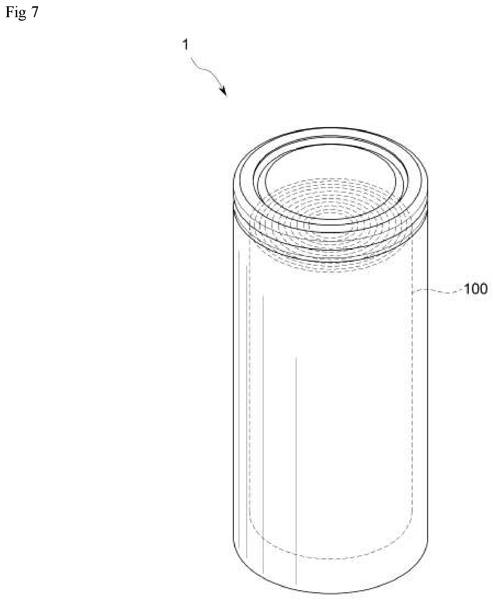

FIG. 7 is a perspective view of a battery cell according to an embodiment of the present invention. Referring to FIG. 7, a battery cell of the present invention may include the aforementioned electrode stack (100) and a can for housing the electrode stack (100). Although the can is illustrated as being cylindrical in the drawings, the shape of the can is not particularly limited, and may, for example, be substantially in the form of a rectangular parallelepiped.

A battery pack according to the present invention may include one or more of the battery cells described above.

A device according to the present invention may include the battery pack described above as a power source.

The device may be selected from the group consisting of a mobile phone, a portable computer, a smartphone, a smart pad, a netbook, a light electric vehicle (LEV), an electric vehicle, a hybrid electric vehicle, a plug-in hybrid electric vehicle, and a power storage device.

The foregoing description is merely illustrative of the technical spirit of the present invention, and various modifications, changes, and substitutions may be made by those of ordinary skill in the art to which the present invention pertains without departing from the essential characteristics thereof. Therefore, the embodiments are for illustrative purposes and not for limiting the technical spirit of the present invention, and the scope of the technical spirit of the present invention is not limited by these embodiments. The scope of protection of the present invention shall be interpreted based on the following claims, and all technical ideas falling within an equivalent scope shall be construed as being included within the scope of the present invention.

### [DESCRIPTION OF REFERENCE NUMERALS]

- 1:: Battery cell
- 100:: Electrode stack
- 110:: First positive electrode
- 120:: First negative electrode
- 130:: Second positive electrode
- 140:: Second negative electrode
- 150:: First separator
- 160:: Second separator

## Claims

1. A battery cell including a wound electrode stack,
wherein the electrode stack includes a plurality of positive electrodes and a plurality of negative electrodes, and
wherein, for at least two of the electrodes, the winding center of the electrode with a lower active material loading is located inward of the winding center of the electrode with a higher active material loading.

2. The battery cell of claim 1, wherein
the electrode stack is wound such that, among the winding centers of the respective electrodes, the winding center of the negative electrode is located at the innermost position.

3. The battery cell of claim 2,
wherein the electrode stack
comprises a first positive electrode, a first negative electrode, a second positive electrode, and a second negative electrode, and
is wound such that the winding center of the first negative electrode, the winding center of the first positive electrode, the winding center of the second negative electrode, and the winding center of the second positive electrode are sequentially positioned from the inside to the outside of the battery cell.

4. The battery cell of claim 1, wherein
at least one positive electrode comprises a positive electrode current collector, an inner positive electrode active material layer applied to an inner surface of the positive electrode current collector, and an outer positive electrode active material layer applied to an outer surface of the positive electrode current collector, and
the active material loading amount of the inner positive electrode active material layer is less than the active material loading amount of the outer positive electrode active material layer.

5. The battery cell of claim 1, wherein
at least one negative electrode comprises a negative electrode current collector, an inner negative electrode active material layer applied to an inner surface of the negative electrode current collector, and an outer negative active material layer applied to an outer surface of the negative electrode current collector, and
the active material loading amount of the inner negative electrode active material layer is less than the active material loading amount of the outer negative electrode active material layer.

6. The battery cell of claim 1, wherein
at least one positive electrode comprises a positive electrode current collector, an inner positive electrode active material layer applied to an inner surface of the positive electrode current collector, and an outer positive electrode active material layer applied to an outer surface of the positive electrode current collector,
the active material loading amount of the inner positive electrode active material layer is less than the active material loading amount of the outer positive electrode active material layer,
at least one negative electrode comprises a negative electrode current collector, an inner negative electrode active material layer applied to an inner surface of the negative electrode current collector, and an outer negative active material layer applied to an outer surface of the negative electrode current collector,
the active material loading amount of the inner negative electrode active material layer is less than the active material loading amount of the outer negative electrode active material layer, and
in the outer positive electrode active material layer and the inner negative electrode active material layer facing each other, the capacity of the outer positive electrode active material layer is less than the capacity of the inner negative electrode active material layer.

7. The battery cell of claim 1, wherein
a capacity ratio (N/P Ratio) of the negative electrode and the positive electrode of the electrode stack is 1 or more.

8. The battery cell of claim 1, wherein
the electrode stack further comprises a plurality of separators.

9. The battery cell of claim 8, wherein
the plurality of separators are of the same type.

10. The battery cell of claim 8, wherein
the plurality of separators include two different types of separators.

11. The battery cell of claim 10, wherein
the electrode stack includes an SRS separator and an aramid separator, and
the winding center of the SRS separator is located inward of the winding center of the aramid separator.

12. The battery cell of claim 1, wherein
the electrode stack comprises two different types of negative electrodes, and
is wound such that the winding center of the electrode with a lower volume expansion rate of the two negative electrodes is located inward of the winding center of the other of the two negative electrodes.

13. The battery cell of claim 8,
wherein the electrode stack includes a silicon negative electrode and a graphite negative electrode, and
the graphite negative electrode
comprises at least one of a natural graphite negative electrode and an artificial graphite negative electrode.

14. The battery cell of claim 1, wherein
the electrode stack comprises two different types of negative electrodes, and
is wound such that the winding center of the electrode with a lower thermal conductivity of the two negative electrodes is located outward of the winding center of the other of the two negative electrodes.

15. The battery cell of claim 1, wherein
the electrode stack comprises two different types of positive electrodes, and
is wound such that the winding center of the electrode with a lower volume expansion rate of the two positive electrodes is located inward of the winding center of the other of the two positive electrodes.

16. The battery cell of claim 1, wherein
the electrode stack comprises two different types of positive electrodes, and
is wound such that the winding center of the electrode with a lower thermal conductivity of the two positive electrodes is located outward of the winding center of the other of the two positive electrodes.

17. The battery cell of claim 1, wherein
a thickness of a positive electrode current collector of one positive electrode is different from a thickness of a positive electrode current collector of the other positive electrode.

18. The battery cell of claim 1, wherein
a thickness of a negative electrode current collector of one negative electrode is different from a thickness of a negative electrode current collector of the other negative electrode.

19. A battery pack comprising at least one battery cell according to any one of claims 1 to 18.

20. A device comprising a battery pack according to claim 19 as a power source.

21. The device of claim 20, wherein the device is selected from a mobile phone, a portable computer, a smart phone, a smart pad, a netbook, a Light Electronic Vehicle (LEV), an electric vehicle, a hybrid electric vehicle, a plug-in hybrid electric vehicle, and a power storage device.
